# EUROPEAN PATENT SPECIFICATION

(11) **EP 3 369 277 B1**
(45) Date of publication and mention of the grant of the patent: **31.08.2022**
(21) Application number: 16794672.2
(22) Date of filing: 26.10.2016
(51) Int. Cl.: H04W 72/04, H04W 76/15, H04L 5/00, H04W 28/18

(54) **METHOD AND APPARATUS FOR IMPLEMENTING SIGNALLING TO RE-CONFIGURE LOGICAL CHANNELS**
VERFAHREN UND VORRICHTUNG ZUR SIGNALISIERUNG ZUR REKONFIGURATION VON LOGISCHEN KANÄLEN
PROCÉDÉ ET APPAREIL DE MISE EN OEUVRE D'UNE SIGNALISATION POUR RECONFIGURER DES CANAUX LOGIQUES

(30) Priority: 30.10.2015 US 201562248666 P
(43) Date of publication of application: 05.09.2018
(73) Proprietor: Nokia Technologies Oy, 02610 Espoo (FI)
(72) Inventor: KOSKELA, Timo, 90120 Oulu (FI); VAN PHAN, Vinh, 90100 Oulu (FI); TURTINEN, Samuli, 91100 Ii (FI); PIRSKANEN, Juho, 36200 Kangasala (FI)
(74) Representative: Nokia EPO representatives
(86) International application number: PCT/FI2016/050751
(87) International publication number: WO 2017/072410

(56) References cited:
- US-A1- 2011 170 495
- US-A1- 2012 250 631
- "LTE; Evolved Universal Terrestrial Radio Access (E-UTRA); Radio Resource Control (RRC); Protocol specification (3GPP TS 36.331 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.3.0, July 2010 (2010-07), XP014047472,

## Description

### BACKGROUND

### Field:

The present invention relates to apparatuses, methods and a computer program product for implementing signaling to re-configure logical channel priorities and/or other associated parameters.

### Description of the Related Art:

Long-term Evolution (LTE) is a standard for wireless communication that seeks to provide improved speed and capacity for wireless communications by using new modulation/signal processing techniques. The standard was proposed by the 3rd Generation Partnership Project (3GPP), and is based upon previous network technologies. Since its inception, LTE has seen extensive deployment in a wide variety of contexts involving the communication of data.

US20110170495 A1 discloses a method and apparatus for logical channel prioritization at a user equipment in a multiple uplink carrier system, the method receiving a set of logical channel priorities at the user equipment, the logical channel priorities being assigned on a per carrier basis; and applying the set of logical channel priorities to each logical channel for carrier selection. US20120250631 A1 discloses a downlink control signalling from a network to a user equipment UE associates at least a first logical channel or radio bearer with a first component carrier in a licensed frequency band and associates at least a second logical channel or radio bearer with a second component carrier in an unlicensed frequency band. "LTE; Evolved Universal Terrestrial Radio Access (E-UTRA); Radio Resource Control (RRC); Protocol specification (3GPP TS 63.331 version 9.3.0 Release 9)", Technical Specification, European Telecommunications Standards Institute (ETSI), 650, Route Des Lucioles; F-06921 Sophia-Antipolis; France, vol. 3GPP RAN 2, no. V9.3.0, July (2010) (2010-07), XP014047472 discloses a specification of the Radio Resource Control protocol for the UE-E-UTRAN radio interface.

### SUMMARY:

The scope of the invention is set out in the appended independent claims.

According to a first embodiment, a method may include specifying, by a first network node, a control element to reconfigure a subset of one or more uplink logical channels. The first network node or a second network node may determine that reconfiguration of the specified subset of logical channels is needed. The method may also include transmitting the control element via a control protocol to the second network node. The control element reconfigures the specified subset of logical channels.

In the method of the first embodiment, the first network node and/or the second network node may determine the need to reconfigure a subset of uplink logical channels, associated with the second network node, if the current configuration is not seen as being optimal. For example, the second network node may need more bandwidth on a particular logical channel(s).

In the method of the first embodiment, the transmitting may include transmitting via media access control or radio-resource control.

In the method of the first embodiment, the first network node may be a network infrastructure element, such as, for example, an evolved Node B, and the second network node may be a user equipment.

In the method of the first embodiment, the logical channel was initially configured by radio resource control.

In the method of the first embodiment, the transmitting may include transmitting the control element to configure or reconfigure at least one of a Prioritized Bit Rate, a Bucket Size Duration, and a Logical Channel Priority.

In the method of the first embodiment, one or more logical channels are not reconfigured.

In the method of the first embodiment, as defined in the independent claims, the reconfiguration for the specified subset of logical channels is valid for a predetermined time and/or until a certain condition occurs, after which the initial configuration is restored.

According to a second embodiment, a computer program product may be embodied on a non-transitory computer readable medium. The computer program product may be configured to control a processor to perform a method according to the first embodiment.

According to a third embodiment, a method may include receiving, by a first network node, a control element via a control protocol from a second network node. The control element reconfigures a subset of one or more uplink logical channels. The first network node or the second network node determines that reconfiguration of the specified subset of logical channels is needed. The method may also include reconfiguring the specified subset of logical channels.

In the method of the third embodiment, the first network node and/or the second network node may determine the need to configure a subset of uplink logical channels, associated with the first network node, if the current configuration is not seen as being optimal. For example, the first network node may need more bandwidth on a particular logical channel(s).

In the method of the third embodiment, the receiving comprises receiving via media access control or radio-resource control.

In the method of the third embodiment, the first network node may be a user equipment, and the second network node may be a network infrastructure element, such as, for example, an evolved Node B.

In the method of the third embodiment, the logical channel was initially configured by radio resource control.

In the method of the third embodiment, the receiving may include receiving the control element to configure or reconfigure at least one of a Prioritized Bit Rate, a Bucket Size Duration, and a Logical Channel Priority.

In the method of the third embodiment, one or more logical channels are not reconfigured.

In the method of the third embodiment, as defined in the independent claims, the reconfiguration for the specified subset of logical channels is valid for a predetermined time and/or until a certain condition occurs, after which the initial configuration is restored.

According to a fourth embodiment, a computer program product may be embodied on a non-transitory computer readable medium. The computer program product may be configured to control a processor to perform a method according to the third embodiment.

According to a fifth embodiment, an apparatus may include specifying means for specifying a control element to reconfigure a subset of one or more uplink logical channels. The apparatus or a network node may determine that reconfiguration of the specified subset of logical channels is needed. The apparatus may also include transmitting means for transmitting the control element via a control protocol to the network node. The control element reconfigures the specified subset of logical channels.

According to a sixth embodiment, an apparatus may include receiving means for receiving a control element via a control protocol from a network node. The control element reconfigures a subset of one or more uplink logical channels. The apparatus or the network node determines that reconfiguration of the specified subset of logical channels is needed. The apparatus may also include reconfiguring means for reconfiguring the specified subset of logical channels.

### BRIEF DESCRIPTION OF THE DRAWINGS:

For proper understanding of the invention, reference should be made to the accompanying drawings, wherein:
Fig. 1 illustrates an LTE LogicalChannelConfig Information Element, in accordance with certain embodiments of the present invention.
Fig. 2 illustrates uplink (UL) scheduling as performed by a user equipment (UE), in accordance with certain embodiments.
Fig. 3 illustrates an example Media Access Control (MAC) Control Element (CE) for a priority reconfiguration message.
Fig. 4 illustrates an example MAC Protocol Data Unit (PDU) Format for Logical Channel Configuration MAC Control Elements, in accordance with certain embodiments.
Fig. 5 illustrates another example MAC PDU Format for Logical Channel Configuration MAC Control Elements, in accordance with certain embodiments.
Fig. 6 illustrates a flowchart of a method in accordance with certain embodiments of the invention.
Fig. 7 illustrates a flowchart of a method in accordance with certain embodiments of the invention.
Fig. 8 illustrates an apparatus in accordance with certain embodiments of the invention.
Fig. 9 illustrates an apparatus in accordance with certain embodiments of the invention.
Fig. 10 illustrates an apparatus in accordance with certain embodiments of the invention.
Fig. 11 illustrates possible different 5G radio network architecture options in in accordance with certain embodiments of the present invention.

### DETAILED DESCRIPTION:

Certain embodiments of the present invention relate to implementing signaling to re-configure logical channel priorities and/or other associated parameters. Certain embodiments may use a combination of Radio-Resource-Control-based configuration of logical channel priority, along with Media-Access-Control-based reconfiguration of individual channel priorities and/or individual parameters associated with these priorities, as described in more detail below.

In certain situations, it may be preferable to change priority-associated parameters for a certain logical channel. For example, a user equipment (UE) may wish to receive more data from a specific logical channel. In these certain situations, the original configuration may not be considered to be optimal.

With certain embodiments, logical channels may define what type of information is transmitted over an air interface. For example, logical channels may define traffic channels, control channels, multicast channels, system broadcast channels, and/or direct link channels. In the case of LTE, a logical channel may correspond to a radio bearer, like a signaling radio bearer or a data radio bearer, which may correspond to an Evolved Packet System (EPS) bearer. In the case of 5G, a logical channel may correspond to a service, like a service flow, or a sub-service flow inside a service flow (which could be, for example, signaling services or data traffic services). One service may be associated with multiple logical channels. Logical channels may be defined between MAC and Radio Link-Control-Sublayer / Radio-Link-Control (RCS/RLC) protocol layers, as an example, but they may also be associated between MAC and higher layers in general.

As described in more detail below, control signaling may be initiated by either a UE (for reconfiguring uplink (UL) communication) or by an evolved Node B (eNB) (for reconfiguring both UL and downlink (DL) communication), based on certain triggers. RRC may configure multiple options for Logical Channel (LC) configuration, and MAC may perform reconfiguration based on the configured options. Alternatively, RRC may indicate which parameters are configurable by MAC.

Certain embodiments of the present invention may be considered to be improvements to future 5G radio access technologies. Certain embodiments may also be applicable to Long Term Evolution - Advanced (LTE-A) technologies.

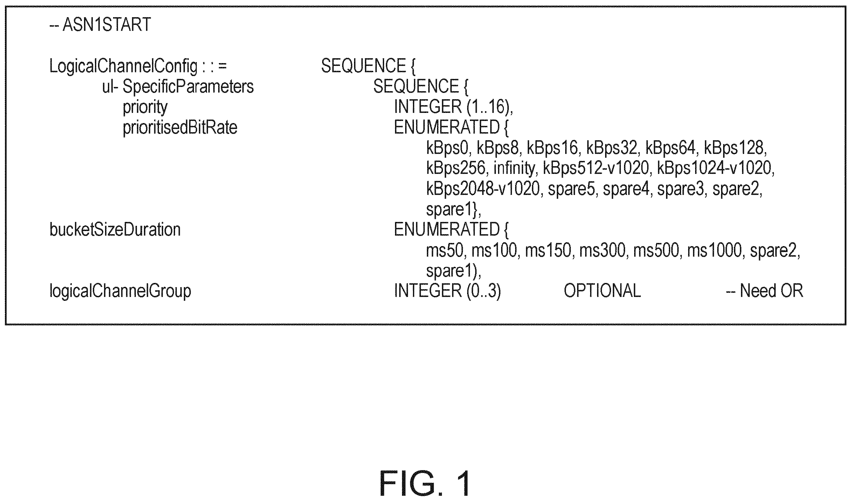

With current LTE systems, performing uplink (UL) scheduling with a finer granularity (such as performing scheduling on a per bearer basis, for example) is generally performed by the user equipment (UE). The UE may perform the finer UL scheduling on Transport Block (TB) resources that are granted by an eNB. The UL scheduling may be performed in accordance with logical channel prioritization. Logical channel prioritization provides a balance between evolved Node B (eNB) scheduler complexity and signalling overhead, because the UE is responsible for filling up a Media Access Control (MAC) Protocol Data Unit (PDU). The UE may be responsible for filling up the MAC PDU according to rules defined in standard and configured parameters related to these rules. The parameters may be configured for the UE during a bearer establishment or modification procedure. For example, the parameters may be listed in the Radio Resource Control (RRC) LogicalChannelConfig information element of Fig. 1. Fig. 1 illustrates an LTE LogicalChannelConfig Information Element, in accordance with certain embodiments of the present invention.

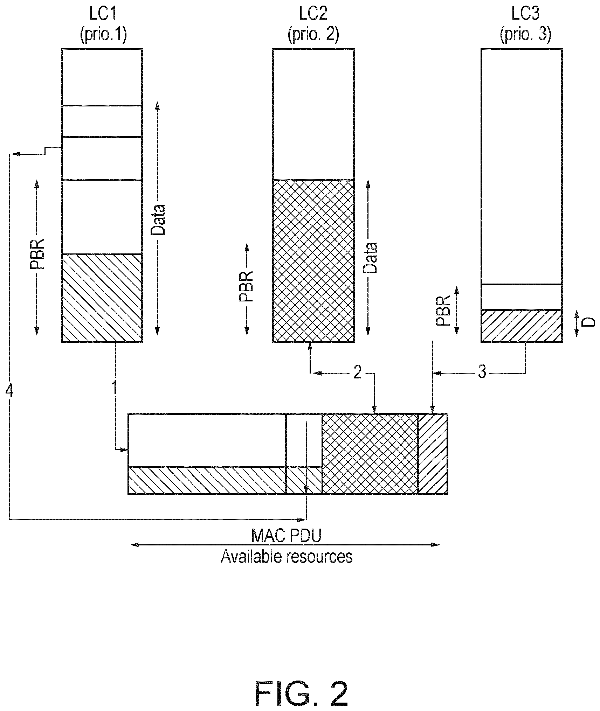

Fig. 2 illustrates UL scheduling as performed by a UE, in accordance with certain embodiments. Fig. 2 illustrates how the UE fills up the MAC PDU, in accordance with certain embodiments. Scheduling of uplink data can be controlled by configuring, for each logical channel, the following: (1) priority, where an increasing priority value indicates a lower priority level; (2) prioritisedBitRate, which sets the Prioritized Bit Rate (PBR); and/or (3) bucketSizeDuration which sets the Bucket Size Duration (BSD). The UE maintains a variable Bj for each logical channel j. Bj may be initialized to zero when the related logical channel is established and may be incremented by the product PBR × TTI duration for each TTI, where PBR is a Prioritized Bit Rate of logical channel j and TTI is a Transmission Time Interval. However, the value of Bj generally does not exceed the bucket size, and, if the value of Bj is larger than the bucket size of logical channel j, it is generally set to the bucket size. The bucket size of a logical channel may correspond to PBR × BSD. Referring to Fig. 1, the UE has 3 logical channels (LC1, LC2, LC3) with the configured priorities 1, 2, and 3, respectively. The UE will assign up to B₁ amount of data to the LC1 (marked as PBR in the figure) (see arrow 1), and then move to LC2 to assign up to B₂ amount of data (see arrow 2), and then assign up to B₃ amount of data to LC3 (see arrow 3). LC3, however, does not have as much data available as the B₃ would allow, so UE will allocate resources for the whole data junk in the LC3. As the PDU still has resources available, the highest priority channel LC1 is given the rest of the resources until either the PDU or the logical channel data is exhausted (see arrow 4).

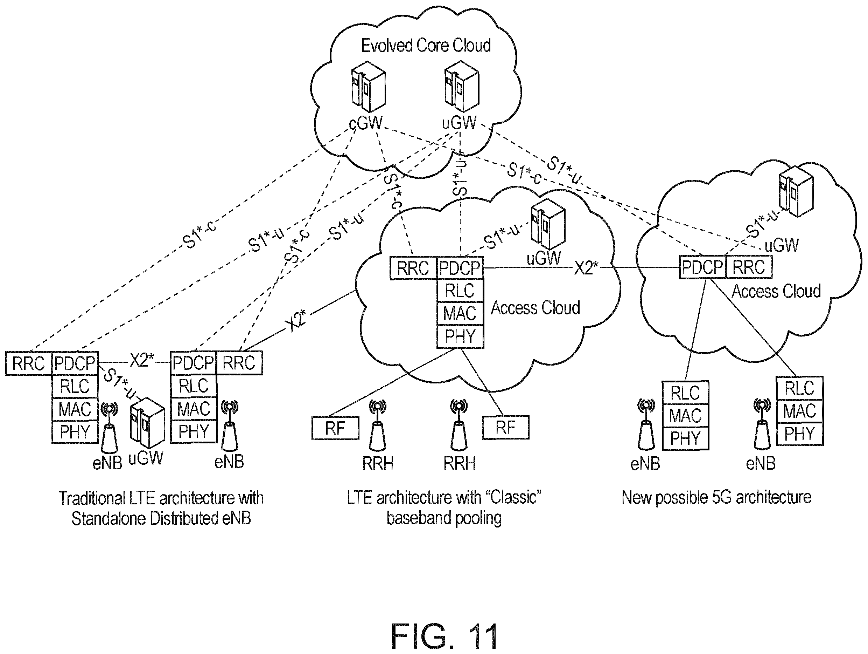

For LTE bearers, the above-described method of scheduling (performed by the UE) may perform well because the bearer context (of LTE bearers) is not assumed to change often (if there are any changes at all) during the bearer lifetimes. However, in 5G, in order to support an envisioned dynamic Quality of Service (QoS) functionality, the above-described method of scheduling (of Fig. 2) may experience certain limitations, as the configuration for the above-described scheduling is generally provided solely via Radio Resource Control (RRC). Performing the configuration solely via RRC may result in too much signalling overhead and signalling delay in the event that very dynamic changes to configuration are required. Additionally, more flexible radio network architecture options envisioned in the context of 5G can lead to a radio architecture where MAC protocol, and thus uplink packet scheduling, would be located in a physically different location compared to RRC protocol (see Fig. 11). Thus, generally, RRC would not be directly be aware of any reconfiguration needs of the uplink packet scheduling and could not react on it. Utilizing network signalling between MAC and RRC would introduce frequent signalling between MAC and RRC protocols in radio network, by first MAC requesting such modification to the existing configuration and then RRC informing an outcome of change in configuration.

For 5G, one option may be to allow the eNB to also schedule UL, on a per logical channel basis, to provide the eNB with greater flexibility in scheduling UL. This option was adopted for WiMAX as an alternative to scheduling UL on a per UE basis.

However, this option may require certain requirements to be met in order for a physical layer grant to be able to support differentiation of logical channels, and in order to support sharing between the logical channels in the physical layer grant. Supporting such a scheme may result in too much additional overhead (to be required from the physical layer grant).

Furthermore, the UE may still need to perform some kind of scheduling function for this embodiment, and for cases where a network (NW) scheduling decision cannot fill the whole grant. Also, in most of the cases, such fine granularity of scheduling may not be needed at all, and the system may use a grant solution on a per UE basis.

Additionally, with LTE, the UE may need to create a MAC Protocol Data Unit (PDU) to first fulfil a priority bitrate requirement for each logical channel, and then the UE may fill the remaining available space of the MAC PDU, in accordance with a strict priority order. Thus, UE MAC may need to address logical channels multiple times. UE MAC may not necessarily request a correct Radio Link Control (RLC) PDU size when processing a logical channel for the first time, as shown in Fig. 2, for logical channel 1. The need to address logical channels multiple times may be considered as a problematic requirement when processing time-critical functions of user plane PDU processing, especially in the context of 5G, where user plane latency is targeted to be reduced by a factor of 10 compared to LTE.

Certain embodiments of the present invention may be directed to an enhancement to LTE so that LTE may support more dynamic configuration, and so that LTE may support UL scheduling by the eNB. These enhancements may achieve a same performance as the per logical channel scheduling scheme, with negligible overhead compared to the per logical channel scheduling scheme. Additionally, certain embodiments are directed to a solution where a prioritized bitrate requirement is handled differently, thus avoiding an increase in a load for time-critical MAC PDU processing.

Certain embodiments of the present invention may be directed to a method for performing fast configuration and/or reconfiguration of uplink logical channel parameters, by the network (NW), to control the UL scheduling performed by the UE.

In certain embodiments of the present invention, either the network or the user equipment can determine the need for reconfiguration of channel priority and/or associated parameters for certain logical channels.

With certain embodiments, a new configuration of uplink logical channel parameters may be transmitted on a MAC Control Element (CE), and the new configuration may include at least one of the following parameters: a Prioritized Bit Rate (PBR), a Bucket Size Duration (BSD), and/or a Logical Channel Priority, for example. The new configuration may be transmitted for at least one logical channel parameter. For other logical channel parameters, the current/existing configuration may be applied.

With certain embodiments, the new configuration may also be transmitted via RRC, as performed when configuring the original/initial configuration. For example, the NW or the UE may determine a need to reconfigure priority and/or other associated parameters (of a certain logical channel and/or a group of logical channels). The reconfiguration of these logical channels may then be performed via RRC. This reconfiguration is temporary. As defined in the independent claims, the reconfiguration is valid for a predetermined period of time or valid until a specific condition occurs, after which the initial configuration is restored. Embodiments of the present invention may perform configuration/reconfiguration using control protocols such as MAC, RRC, or any other protocol.

For example, the network (NW) may decide to change a Prioritized Bit Rate (PBR) and/or a BucketSizeDuration for a logical channel, but the NW may decide to not change the Priority for the logical channel.

A message, transmitted by the NW to change the PBR and the BucketSizeDuration, may also have a field that explicitly indicates when the new uplink logical channel parameters are to be applied. The new parameters/values may be applied, for example, after a certain number of Transmission Time Intervals (TTIs), such as "N" TTIs. Alternatively, the new parameters/values may also be applied, for example, in a next UL grant, or the new parameters/values may be applied in accordance with a standard's specification.

With certain embodiments, the NW can determine whether the UE applied the new parameters, and the NW may attempt to reconfigure the UE if the NW determines that the configuration was not applied by the UE.

With certain embodiments, RRC may have been used to configure the UE's Logical Channels or Logical Channel Groups. The configuration can be dynamically applied. For example, MAC may be restricted so as to not change configuration of Logical Channels that are involved in Control Plane (CP) signalling, or so as to not change Logical Channels associated with Granted Bit Rate (GBR) traffic. With certain embodiments, RRC may explicitly configure certain logical channels that cannot be configured by MAC.

With certain embodiments, RRC may configure a separate identifier (ID) for each logical channel that the MAC uses for configuring the new parameters. The ID could be the same for multiple logical channels.

With certain embodiments, RRC may be used to configure a timer for the UE regarding how long the MAC-provided reconfiguration is valid, before the original configuration that was configured by RRC is restored.

With certain embodiments, during a Logical Channel establishment or modification procedure, RRC may configure multiple options for performing the logical channel configuration. MAC can reconfigure the logical channel based on these options. With certain embodiments, each configuration may be assigned an ID. MAC may indicate the ID in the MAC CE.

With certain embodiments, RRC may indicate (to the UE) which parameters are dynamically configurable by the MAC. This indication may be provided implicitly or explicitly.

With regard to providing the indication implicitly, with RRC configuration of the logical channel, at least one of the parameters (which is allowed to be configured by MAC) is omitted. This requires MAC to signal the values that are used before UL scheduling can take place. Alternatively, the UE may apply some preconfigured/default values.

With regard to providing the indication explicitly, with RRC configuration of the logical channel, RRC may indicate the parameters that can be configured by MAC. RRC may also configure a reference value or a dynamic range for the parameters within which the MAC configuration should remain.

With certain embodiments, the Prioritized Bit Rate (PBR) and Bucket Size Duration (BSD) may be measured in a Radio Link-Control-Sublayer / Radio-Link-Control (RCS/RLC) protocol layer, potentially excluding RLC re-transmissions from prioritized bitrate rate calculation. MAC may fulfil the MAC PDU in accordance with a strict priority order. In the event that a lower priority LC does not meet the prioritized bitrate, but where a higher priority LC meets the prioritized bitrate, RCS/RLC can change priorities of the logical channel for a pre-determined amount of time. Changing the priorities of the logical channel would allow MAC to continue filling the MAC PDU in accordance with a priority order, where only an order of the logical channels would change.

Further, certain embodiments of the present invention are directed to implementing the following triggers/conditions for the new Logical Channel (LC) Configuration. The network (NW) may trigger the reconfiguration message based on observed data rates per logical channel, based on establishment of a new logical channel, and/or based on an observed delay, for example. MAC may also take inputs from an Application scheduler/awareness function. The Application scheduler/awareness function may handle the application-specific Quality of Experience (QoE) to adapt the configuration on a per logical channel basis.

The UE may transmit a Buffer status report, which indicates a buffer level for each logical channel or logical channel group. The buffer status report may trigger the eNB to indicate, in a MAC layer CE, the new configuration of logical channel parameters that are mentioned above.

With certain embodiments, the UE may transmit additional information, such as a queuing delay per logical channel (or per Logical Channel Group (LCG) and/or for all LCG on average) together with a Buffer Status Report (BSR) report to allow the eNB to re-configure new logical channel configuration values in accordance with more information.

The UE may request a new UL logical channel prioritization configuration in a MAC layer CE. The eNB may acknowledge/rej ect/reformat the configuration in a MAC layer feedback message. The message may be an Acknowledgement/Reject (ACK/REJECT) message, or the NW may reply with a new preferred configuration. The UE may request priority for a specific logical channel, for example, upon observing a long queuing delay (on a per logical channel basis) or upon triggering of a new application that needs more bandwidth from a certain logical channel that the UE has mapped it to. A specific prohibit timer may be configured by the NW to prevent the UE from requesting reconfiguration too often. While the timer is running, the UE is not allowed to request reconfiguration. However, although the UE may not be allowed to request reconfiguration during the running of the timer, the NW may continue to send a reconfiguration request. The NW may configure the UE with threshold values with regard to when to trigger the indication. For instance, the indication may be triggered when a buffer or queuing delay of a certain logical channel exceeds configured threshold values.

Because the Buffer Status report (transmitted by the UE) is a MAC layer message, providing the logical channel prioritization configuration and reconfiguration may provide faster feedback for reacting to buffer statuses of different logical channels. Providing the logical channel prioritization configuration and reconfiguration may also provide more dynamic possibilities for Quality of Service (QoS) control with only a minor increase in the scheduling overhead, because the UE has the responsibility for multiplexing the logical channels based on given parameters.

The UE may request, by transmitting a MAC layer CE to the eNB, to configure a new priority for downlink (DL) logical channel / channels for the UE. The UE may have better knowledge of a specific service that uses the logical channel. Requesting higher priority may increase the QoS for the service.

In the event that Prioritized Bit Rate (PBR) and Bucket Size Duration (BSD) are handled in the Radio Link-Control-Sublayer/Radio-Link-Control (RCS/RLC) layer, the UE may change the priority of a lower priority Logical Channel (LC) to a higher priority LC, if the data rate of the lower priority LC meets a threshold PBRlow and if the data rate of the higher priority LC meets a PBRhigh threshold.

The UE may change the priority order back to the way it was, when the data rate of the higher priority LC meets PBRlow or when the data rate of the lower priority LC meets PBRhigh. Furthermore, the maximum duration of the change can be controlled by a timer set by the NW

In the event of three or more logical channels with different priority, the UE may compare the lowest priority LC to a logical channel that is one higher (in order of the priorities), and then to a next highest priority LC, so that the priority of the lowest LC may be increased until there is no other higher priority LC that meets PBRhigh value. Naturally, Signalling Radio Bearer (SRB) could be kept as the highest priority logical channels.

With certain embodiments of the present invention, the MAC layer in radio network may monitor the data rates of different logical channels and trigger sending the reconfiguration message to change the priority of a lower priority Logical Channel (LC) to a higher priority LC, if the data rate of the lower priority LC meets a threshold PBRlow, and if the data rate of the higher priority LC meets a PBRhigh threshold. The values of PBRhigh and PBRlow the MAC layer may have been received from RRC or an Application scheduler/awareness function.

The MAC layer in radio network may trigger sending the reconfiguration message to change the priority order back to the way it was, when the data rate of the higher priority LC meets PBRlow or when the data rate of the lower priority LC meets PBRhigh. Furthermore, the maximum duration of the change can be controlled by a timer from RRC or an Application scheduler/awareness function.

Certain embodiments of the present invention may also be directed to a UE that is served with multi-connectivity (MC), which is provided by more than one serving eNBs (radio legs). In this case, a logical channel may be split and transmitted in more than one radio leg. The serving network may configure a same (coordinated) or independent logical channel configuration and reconfiguration (where the configured parameters may be, for example, PBR, BSD, Priority) for a split logical channel across all the serving eNBs or per a serving eNB, respectively.

In the event that a same or coordinated logical channel configuration is used, and, in the event that a logical channel is split across all involved serving eNBs, the UE may select a serving eNB to place the request as proposed above (where the request indicates relevant multi-connectivity (MC) context, such as a list of Cell IDs in MC), and a serving eNB (which makes a decision to reconfigure the requested logical channel) may distribute the decision across the involved serving eNBs, based on the indicated list of cell IDs or based on the stored UE context where all the serving eNBs are listed.

In the event that an independent logical channel configuration is used per a serving eNB, the UE may request and receive re-configuration per a serving eNB. In this case, a split UL logical channel being served with MC may have more than one configuration at the UE side, where each configuration corresponds to an involved serving eNB or a radio leg.

With certain embodiments, based on the configuration that the UE receives from different eNBs, the UE may scale the allocation of the logical channel data to different legs based on the adapted configuration.

With certain embodiments, NW may configure additional parameter(s) via a LogicalChannelConfig message. One example additional parameter may include QueuingDelayFactor. This factor may be signalled when a logical channel is configured or re-configured. The factor may indicate when a predefined queuing delay limit (QDL) has been exceeded for a specific logical channel. The UE may be allowed to increase the bucket size value (Bj), PBR value, or logical channel priority by the configured factor (QueuingDelayFactor). The QDL may be expressed in time units such as milliseconds, number of transmission time intervals, number of subframes, and/or number of system frames, for example. The QDL may be signalled by NW via an RRC/MAC CE message, or the QDL can be a predefined metric such as N% above the average queuing delay.

With certain embodiments, the eNB may indicate, by signalling in a MAC CE, the following configurations. One configuration may be to decrease/increase priority by indicating a Logical Channel Group (LCG) and a LogicalChannelPriority value. This sets the priority in all the logical channels in the group to be the same, or decreases/increases the priority by a specific amount indicated in the message.

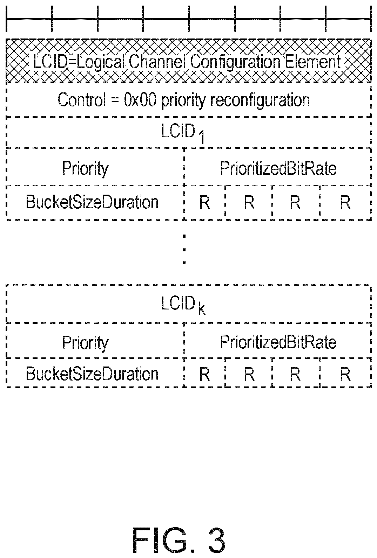

Fig. 3 illustrates an example MAC PDU Format for Logical Channel Configuration MAC Control Elements, in accordance with certain embodiments. Specifically, Fig. 3 illustrates an example MAC CE for a priority reconfiguration message.

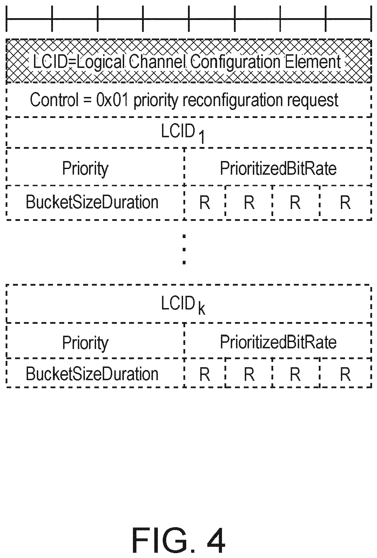

Fig. 4 illustrates another example MAC PDU Format for Logical Channel Configuration MAC Control Elements, in accordance with certain embodiments. Fig. 4 illustrates an example MAC CE for a priority reconfiguration request message.

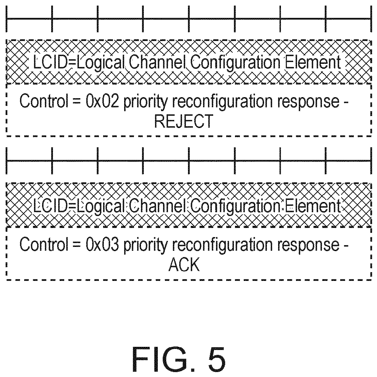

Fig. 5 illustrates another example MAC PDU Format for Logical Channel Configuration MAC Control Elements, in accordance with certain embodiments. Fig. 5 illustrates an example MAC CE for rejecting and acknowledging a logical channel re-configuration/configuration.

Certain embodiments may improve QoS control for an eNB scheduler, with only a minor increase in complexity for the UE and NW. Certain embodiments may provide the same performance provided as if the eNB would schedule each Logical Channel separately for UL, with negligible overhead increase.

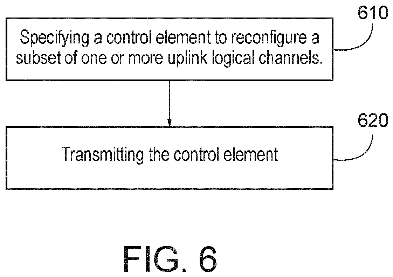

Fig. 6 illustrates a flowchart of a method in accordance with certain embodiments of the invention. The method illustrated in Fig. 6 includes, at 610, specifying, by a first network node, a control element to reconfigure a subset of one or more uplink logical channels, wherein the first network node or a second network node determines that reconfiguration of the specified subset of logical channels is needed. The method may also include, at 620, transmitting the control element via a control protocol to the second network node. The control element reconfigures the specified subset of logical channels.

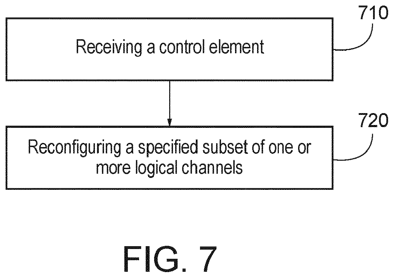

Fig. 7 illustrates a flowchart of a method in accordance with certain embodiments of the invention. The method illustrated in Fig. 7 includes, at 710, receiving, by a first network node, a control element via a control protocol from a second network node. The control element reconfigures a subset of one or more uplink logical channels. The first network node or the second network node determines that reconfiguration of the specified subset of logical channels is needed. The method may also include, at 720, reconfiguring the specified subset of logical channels.

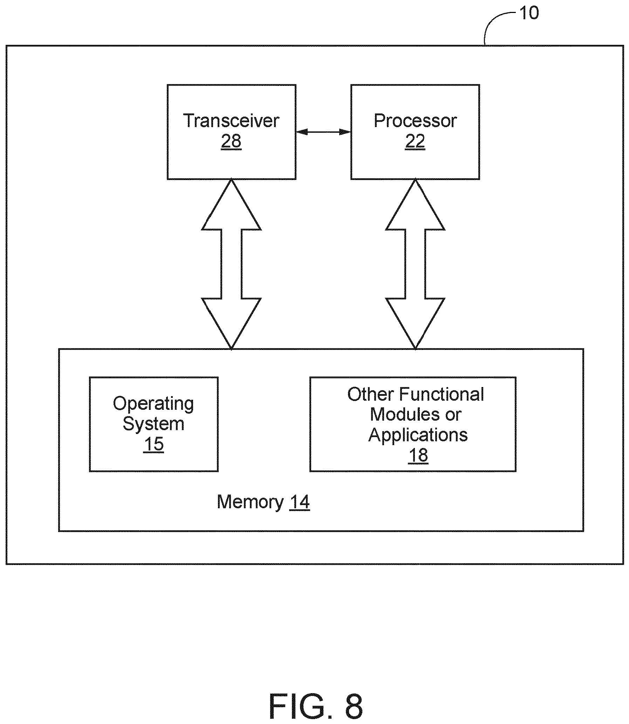

Fig. 8 illustrates an apparatus in accordance with certain embodiments of the invention. In one embodiment, the apparatus can be a base station and/or an evolved Node B, for example. In another embodiment, the apparatus may be a UE, for example. The apparatus may be configured to perform, at least, the methods described in Fig. 6 and/or Fig. 7. Apparatus 10 can include a processor 22 for processing information and executing instructions or operations. Processor 22 can be any type of general or specific purpose processor. While a single processor 22 is shown in Fig. 8, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 include any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 can store software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

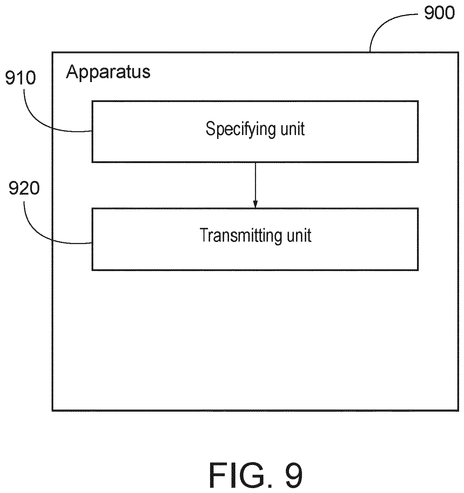

Fig. 9 illustrates an apparatus in accordance with certain embodiments of the invention. Apparatus 900 can be a network node such as a base station and/or an eNB, for example. Apparatus 900 can include a specifying unit 910 that specifies a control element to reconfigure a subset of one or more uplink logical channels. The first network node or a second network node determines that reconfiguration of the specified subset of logical channels is needed. Apparatus 900 can also include a transmitting unit 920 that transmits the control element via a control protocol to the network node. The control element reconfigures the specified subset of logical channels.

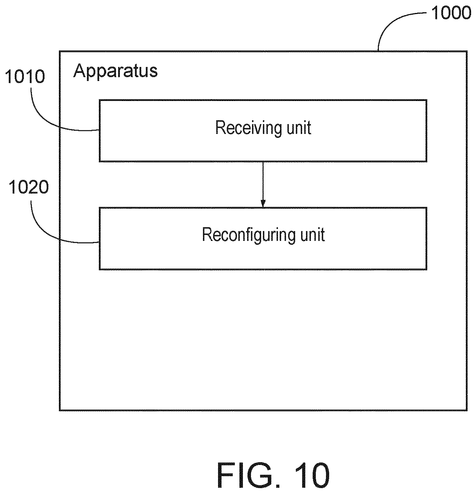

Fig. 10 illustrates an apparatus in accordance with certain embodiments of the invention. Apparatus 1000 can be a user equipment, for example. Apparatus 1000 can include a receiving unit 1010 that receives a control element via a control protocol from a network node. The control element reconfigures a subset of one or more uplink logical channels. Apparatus 1000 or the network node determines that reconfiguration of the specified subset of logical channels is needed. Apparatus 1000 can also include a reconfiguring unit 1020 that reconfigures the specified subset of logical channels.

Fig. 11 illustrates different radio network architecture examples in accordance with certain embodiments of the invention. The traditional LTE architecture presented distributed eNBs that are standalone and support all 5G protocols in a co-located manner. The eNB may additionally host user plane gateway (uGW) functions for local breakout. The LTE architecture with "classic" based band pooling present a centralized radio network architecture where all radio protocols, including physical layer, are implemented in a centralized manner in a central entity or access cloud. The central entity or access cloud is connected to the remote radio heads (RRH) with an extremely low latency, high data rate interface to convey digital samples of baseband radio interface between radio frequency (RF) module and physical layer protocol entity. Finally, Fig. 11 illustrates a possible new 5G radio architecture where PDCP and RRC are implemented in a central entity or access cloud and RLC, MAC and PHY protocols are in distributed NBs. The central entity and eNBs may be connected with a standard IP connection and interface that may support a variety of different transport solutions. One skilled in the relevant art will recognize that these architecture options are to be seen as examples, and that the invention can be practiced also in other types of network architecture solutions.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. An apparatus (10, 900, 1000), comprising at least means for:
receiving a control element via a control protocol from a network node, wherein the control element reconfigures a specified subset of one or more uplink logical channels, and the apparatus determines that reconfiguration of the specified subset of logical channels is needed; and
reconfiguring the specified subset of logical channels;
**characterized in that** the reconfiguration for the specified subset of logical channels is valid for a predetermined time and/or until a certain condition occurs, after which the initial configuration is restored.

2. The apparatus (10, 900, 1000) according to claim 1, wherein the receiving comprises receiving via media access control or radio-resource control.

3. The apparatus (10, 900, 1000) according to any of claims 1 to 2, wherein the apparatus comprises a user equipment, and the network node comprises a network infrastructure element.

4. The apparatus (10, 900, 1000) according to any of claims 1 to 3, wherein the receiving comprises receiving the control element to configure or reconfigure at least one of a Prioritized Bit Rate, a Bucket Size Duration, and a Logical Channel Priority.

5. The apparatus (10, 900, 1000) according to any of claims 1 to 4, wherein the apparatus (10, 900, 1000) comprises means for transmitting at least one of the following information together with a buffer status report to the network node: queuing delay per logical channel, queuing delay per logical channel group or queuing delay for all logical groups on average.

6. An apparatus (10, 900, 1000), comprising at least means for:
specifying a control element to reconfigure a subset of one or more uplink logical channels, wherein the apparatus (10, 900, 1000) determines that reconfiguration of the specified subset of logical channels is needed; and
transmitting the control element via a control protocol to the network node, wherein the control element reconfigures the specified subset of logical channels;
ch aracteri z ed in that the reconfiguration for the specified subset of logical channels is valid for a predetermined time and/or until a certain condition occurs, after which the initial configuration is restored.

7. The apparatus (10, 900, 1000) according to claim 6, wherein the transmitting comprises transmitting the control element to configure or reconfigure at least one of a Prioritized Bit Rate, a Bucket Size Duration, and a Logical Channel Priority.

8. The apparatus (10, 900, 1000) according to any of claims 1 to 7, wherein the one or more logical channels were initially configured by radio resource control.

9. The apparatus (10, 900, 1000) according to any of claims 1 to 8, wherein one or more logical channels are not reconfigured.

10. A method, comprising:
specifying, by a first network node, a control element to reconfigure a specified subset of one or more uplink logical channels, wherein the first network node determines that reconfiguration of the specified subset of logical channels is needed; and
transmitting the control element via a control protocol to the second network node, wherein the control element reconfigures the specified subset of logical channels, **characterized in that** the reconfiguration for the specified subset of logical channels is valid for a predetermined time and/or until a certain condition occurs, after which the initial configuration is restored.

11. A method, comprising:
receiving, by a first network node, a control element via a control protocol from a second network node, wherein the control element reconfigures a specified subset of one or more uplink logical channels, and the first network node determines that reconfiguration of the specified subset of logical channels is needed; and
reconfiguring the specified subset of logical channels; **characterized in that** the reconfiguration for the specified subset of logical channels is valid for a predetermined time and/or until a certain condition occurs, after which the initial configuration is restored.

12. A computer program product, embodied on a non-transitory computer readable medium, the computer program product configured to control a processor to perform a method according to claim 10 or 11.

## Patentansprüche

1. Vorrichtung (10, 900, 1000), die Mittel für mindestens Folgendes umfasst:
Empfangen eines Steuerelements via ein Steuerprotokoll von einem Netzwerkknoten, wobei das Steuerelement einen angegebenen Untersatz von einem oder mehreren logischen Uplinkkanälen neu ausgelegt und die Vorrichtung bestimmt, dass eine Neuauslegung des angegebenen Untersatzes von logischen Kanälen erforderlich ist; und
Neuauslegen des angegebenen Untersatzes von logischen Kanälen;
**dadurch gekennzeichnet, dass** die Neuauslegung für den angegebenen Untersatz von logischen Kanälen für eine vorbestimmte Zeit und/oder bis zum Eintreten einer bestimmten Bedingung, wonach die Anfangsauslegung wiederhergestellt wird, gültig ist.

2. Vorrichtung (10, 900, 1000) nach Anspruch 1, wobei das Empfangen das Empfangen via eine Medienzugangssteuerung oder eine Funkressourcensteuerung umfasst.

3. Vorrichtung (10, 900, 1000) nach einem der Ansprüche 1 bis 2, wobei die Vorrichtung eine Teilnehmereinrichtung umfasst und der Netzwerkknoten ein Netzwerkinfrastrukturelement umfasst.

4. Vorrichtung (10, 900, 1000) nach einem der Ansprüche 1 bis 3, wobei das Empfangen das Empfangen des Steuerelements umfasst, um mindestens eines von einer priorisierten Bitrate, einer Bucketgrößendauer und einer logischen Kanalpriorität auszulegen oder neu auszulegen.

5. Vorrichtung (10, 900, 1000) nach einem der Ansprüche 1 bis 4, wobei die Vorrichtung (10, 900, 1000) Mittel zum Übertragen von mindestens einer der folgenden Informationen zusammen mit einem Pufferstatusbericht zum Netzwerkknoten umfasst: Warteschlangenverzögerung pro logischem Kanal, Warteschlangenverzögerung pro logischer Kanalgruppe oder durchschnittliche Warteschlangenverzögerung für alle logischen Gruppen.

6. Vorrichtung (10, 900, 1000), die Mittel für mindestens Folgendes umfasst:
Angeben eines Steuerelements zum Neuauslegen eines Untersatzes von einem oder mehreren logischen Uplinkkanälen, wobei die Vorrichtung (10, 900, 1000) bestimmt, dass eine Neuauslegung des angegebenen Untersatzes von logischen Kanälen erforderlich ist; und
Übertragen des Steuerelements via ein Steuerprotokoll zum Netzwerkknoten, wobei das Steuerelement den angegebenen Untersatz von logischen Kanälen neu ausgelegt;
**dadurch gekennzeichnet, dass** die Neuauslegung für den angegebenen Untersatz von logischen Kanälen für eine vorbestimmte Zeit und/oder bis zum Eintreten einer bestimmten Bedingung, wonach die Anfangsauslegung wiederhergestellt wird, gültig ist.

7. Vorrichtung (10, 900, 1000) nach Anspruch 6, wobei das Übertragen das Übertragen des Steuerelements umfasst, um mindestens eines von einer priorisierten Bitrate, einer Bucketgrößendauer und einer logischen Kanalpriorität auszulegen oder neu auszulegen.

8. Vorrichtung (10, 900, 1000) nach einem der Ansprüche 1 bis 7, wobei der eine oder die mehreren logischen Kanäle anfänglich von einer Funkressourcensteuerung ausgelegt wurden.

9. Vorrichtung (10, 900, 1000) nach einem der Ansprüche 1 bis 8, wobei der eine oder die mehreren logischen Kanäle nicht neu ausgelegt werden.

10. Verfahren, das Folgendes umfasst:
Angeben eines Steuerelements zum Neuauslegen eines angegebenen Untersatzes von einem oder mehreren logischen Uplinkkanälen durch einen ersten Netzwerkknoten, wobei der erste Netzwerkknoten bestimmt, dass eine Neuauslegung des angegebenen Untersatzes von logischen Kanälen erforderlich ist; und
Übertragen des Steuerelements via ein Steuerprotokoll zum zweiten Netzwerkknoten, wobei das Steuerelement den angegebenen Untersatz von logischen Kanälen neu ausgelegt, **dadurch gekennzeichnet, dass** die Neuauslegung für den angegebenen Untersatz von logischen Kanälen für eine vorbestimmte Zeit und/oder bis zum Eintreten einer bestimmten Bedingung, wonach die Anfangsauslegung wiederhergestellt wird, gültig ist.

11. Verfahren, das Folgendes umfasst:
Empfangen eines Steuerelements durch einen ersten Netzwerkknoten via ein Steuerprotokoll von einem zweiten Netzwerkknoten, wobei das Steuerelement einen angegebenen Untersatz von einem oder mehreren logischen Uplinkkanälen neu ausgelegt und der erste Netzwerkknoten bestimmt, dass eine Neuauslegung des angegebenen Untersatzes von logischen Kanälen erforderlich ist; und
Neuauslegen des angegebenen Untersatzes von logischen Kanälen; **dadurch gekennzeichnet, dass** die Neuauslegung für den angegebenen Untersatz von logischen Kanälen für eine vorbestimmte Zeit und/oder bis zum Eintreten einer bestimmten Bedingung, wonach die Anfangsauslegung wiederhergestellt wird, gültig ist.

12. Computerprogrammprodukt, das auf einem nichttransitorischen computerlesbaren Medium enthalten ist, wobei das Computerprogrammprodukt dazu ausgelegt ist, einen Prozessor zu steuern, um ein Verfahren nach Anspruch 10 oder 11 durchzuführen.

## Revendications

1. Appareil (10, 900, 1000), comprenant au moins un moyen pour :
recevoir un élément de commande via un protocole de commande à partir d'un nœud de réseau, dans lequel l'élément de commande reconfigure un sous-ensemble spécifié d'un ou plusieurs canaux logiques de liaison montante, et l'appareil détermine que la reconfiguration du sous-ensemble spécifié de canaux logiques est nécessaire ; et
reconfigurer le sous-ensemble spécifié de canaux logiques ;
**caractérisé en ce que** la configuration du sous-ensemble spécifié de canaux logiques est valable pendant un temps prédéterminé et/ou jusqu'à ce qu'une certaine condition se produise, après quoi la configuration initiale est restaurée.

2. Appareil (10, 900, 1000) selon la revendication 1, dans lequel la réception comprend la réception via une commande d'accès aux médias ou une commande de ressources radio.

3. Appareil (10, 900, 1000) selon l'une quelconque des revendications 1 et 2, dans lequel l'appareil comprend un équipement utilisateur, et le nœud de réseau comprend un élément d'infrastructure de réseau.

4. Appareil (10, 900, 1000) selon l'une quelconque des revendications 1 à 3, dans lequel la réception comprend la réception de l'élément de commande pour configurer ou reconfigurer au moins un parmi un débit binaire prioritaire, une durée de taille de compartiment et une priorité de canal logique.

5. Appareil (10, 900, 1000) selon l'une quelconque des revendications 1 à 4, dans lequel l'appareil (10, 900, 1000) comprend des moyens pour transmettre au moins une des informations suivantes de même qu'un rapport de statut de mémoire tampon au nœud de réseau : un délai de mise en file d'attente par canal logique, un délai de mise en file d'attente par groupe de canaux logiques ou un délai de mise en file d'attente pour tous les groupes logiques en moyenne.

6. Appareil (10, 900, 1000), comprenant au moins un moyen pour :
spécifier un élément de commande pour reconfigurer un sous-ensemble d'un ou plusieurs canaux logiques de liaison montante, dans lequel l'appareil (10, 900, 1000) détermine que la reconfiguration du sous-ensemble spécifié de canaux logiques est nécessaire ; et
transmettre l'élément de commande via un protocole de commande au nœud de réseau, dans lequel l'élément de commande reconfigure le sous-ensemble spécifié de canaux logiques ;
**caractérisé en ce que** la reconfiguration du sous-ensemble spécifié de canaux logiques est valable pendant un temps prédéterminé et/ou jusqu'à ce qu'une certaine condition se produise, après quoi la configuration initiale est restaurée.

7. Appareil (10, 900, 1000) selon la revendication 6, dans lequel la transmission comprend la transmission de l'élément de commande pour configurer ou reconfigurer au moins un parmi un débit binaire prioritaire, une durée de taille de compartiment et une priorité de canal logique.

8. Appareil (10, 900, 1000) selon l'une quelconque des revendications 1 à 7, dans lequel les un ou plusieurs canaux logiques ont été initialement configurés par commande de ressources radio.

9. Appareil (10, 900, 1000) selon l'une quelconque des revendications 1 à 8, dans lequel un ou plusieurs canaux logiques ne sont pas reconfigurés.

10. Procédé, comprenant :
la spécification, par un premier nœud de réseau, d'un élément de commande pour reconfigurer un sous-ensemble spécifié d'un ou plusieurs canaux logiques de liaison montante, dans lequel le premier nœud de réseau détermine qu'une reconfiguration du sous-ensemble spécifié de canaux logiques est nécessaire ; et
la transmission de l'élément de commande via un protocole de commande au deuxième nœud de réseau, dans lequel l'élément de commande reconfigure le sous-ensemble spécifié de canaux logiques, **caractérisé en ce que** la reconfiguration du sous-ensemble spécifié de canaux logiques est valable pendant un temps prédéterminé et/ou jusqu'à ce qu'une certaine condition se produise, après quoi la configuration initiale est restaurée.

11. Procédé, comprenant :
la réception, par un premier nœud de réseau, d'un élément de commande via un protocole de commande à partir d'un deuxième nœud de réseau, dans lequel l'élément de commande reconfigure un sous-ensemble spécifié d'un ou plusieurs canaux logiques de liaison montante, et le premier nœud de réseau détermine que la reconfiguration du sous-ensemble spécifié de canaux logiques est nécessaire ; et
la reconfiguration du sous-ensemble spécifié de canaux logiques ; **caractérisé en ce que** la reconfiguration du sous-ensemble spécifié de canaux logiques est valable pendant un temps prédéterminé et/ou jusqu'à ce qu'une certaine condition se produise, après quoi la configuration initiale est restaurée.

12. Produit de programme informatique, incorporé sur un support non transitoire lisible par ordinateur, le produit de programme informatique étant configuré pour commander un processeur pour réaliser un procédé selon la revendication 10 ou 11.
